# EUROPEAN PATENT SPECIFICATION

(11) **EP 2 532 557 B1**
(45) Date of publication and mention of the grant of the patent: **02.04.2014**
(21) Application number: 12182720.8
(22) Date of filing: 13.11.2009
(51) Int. Cl.: B60R 21/217, B60R 21/205

(54) **Airbag device**
Airbagvorrichtung
Dispositif d'airbag

(30) Priority: 14.11.2008 JP 2008292189
(43) Date of publication of application: 12.12.2012
(62) Divisional of application: 09826148.0
(73) Proprietor: Autoliv Development AB, 44783 Vårgårda (SE)
(72) Inventor: Narita, Masaru, Yokohama, 222-8580 (JP)
(74) Representative: Müller Verweyen

(56) References cited:
- EP-A1- 0 739 788
- WO-A1-2009/022527
- US-A1- 2006 220 355

## Description

### TECHNICAL FIELD

The present invention relates to an airbag device for protecting an occupant of a front passenger seat of a vehicle.

### BACKGROUND ART

An airbag device for protecting an occupant on a front passenger seat side of a vehicle is provided in the interior of an instrument panel on the front passenger seat side. In this airbag device, a problem occurs in that an opening portion of a housing accommodating an airbag bends while receiving pressure generated when the airbag is inflated and deployed. In particular, when a part of the opening portion that is coupled to a shooter portion connected to a lid portion bends, the bent opening portion cannot function appropriately as a hinge during gatefold-opening of the lid portion. As a result, opening of the lid portion is impaired.

In response to this problem, Patent Document 1, for example, employs a reinforcing member for preventing the opening portion from bending.

Patent Document 1: Japanese Patent Application Publication No. 2003-40064

However, with the technique described in Patent Document 1, although a rigidity of the housing is increased by the reinforcing member, deformation causing the housing to approach a spherical shape still occurs when the airbag is inflated and deployed such that pressure is applied to square walls from the inside. As a result, the opening portion of the housing may bend such that its function as a hinge of the lid portion is impaired. Moreover, the housing accommodating the airbag increases in weight.

Document US 20060220355 discloses an airbag device according to the preamble of claim 1.

### DISCLOSURE OF THE INVENTION

In consideration of these problems, an object of the present invention is to provide an airbag device in which deformation of a housing accommodating an airbag is minimized so that opening of a lid portion is not impaired.

To solve the problems described above, there is provided an airbag device according to the present invention, as defined in claim 1.

Likewise in this airbag device having a housing in which the front wall and the rear wall are connected by the connecting portion, when the airbag is inflated and deployed such that pressure is applied to the front and rear walls from the inside, a wall lower portion of the front wall and rear wall inclines outwardly, but a wall upper portion maintains its flat plate shape. As a result, the wall upper portion of the front wall and rear wall is latched to the lid portion without bending, i.e. while maintaining a substantially rectilinear shape. Hence, when the lid portion opens in gatefold form, the wall upper portion of the front wall and rear wall functions as the hinge of the lid portion without problems, and therefore impairment of the opening operation of the lid portion during inflation and deployment of the airbag is prevented.

In other words, the wall lower portion of the front wall and rear wall inclines outwardly, as described above, and although the entirety of the front wall and rear wall, including the wall upper portion, moves downward due to the deformation of the wall lower portion, the front wall and rear wall maintain their flat plate shape. This behavior is unique to the present invention.

The front wall and rear wall are rigid and therefore unlikely to deform even when pressure is applied thereto from the inside. Moreover, the connecting portion connecting the front wall and rear wall connects the front wall and rear wall in a restricted site, i.e. the upper end, and therefore forms a fragile part having low rigidity. Furthermore, by positioning the terminal ends of the rigid front wall and rear wall before the corners rather than extending the walls to the corners, fragility can be maintained in the connecting portion, thereby ensuring that the unique behavior of the present invention is exhibited. In other words, only the fragile connecting portion connects the front wall and rear wall over the corners and the front and rear.

A thickness of a wall upper portion of the front wall or the rear wall is preferably greater than a thickness of a wall lower portion.

According to this constitution, the fragility of the wall lower portion of the front wall or the rear wall increases, and as a result, the rigidity of the wall upper portion increases relative thereto, thereby promoting the outward incline deformation of the wall lower portion.

With the airbag device according to the present invention, deformation of the respective upper end portions of the front wall and the rear wall, which function as the hinges of the lid portion, of the housing accommodating the airbag is minimized such that opening of the lid portion is not impaired.

### BRIEF DESCRIPTION OF THE DRAWINGS

Fig. 1 is a layout view showing an example of a position of an airbag device according to a first embodiment not being a part of the present invention in the interior of an instrument panel of a vehicle;
Fig. 2 is an assembly diagram showing the airbag device of Fig. 1;
Fig. 3 is a three-sided view of the airbag device of Fig. 1;
Fig. 4 is a partial perspective view showing an example of a boundary between a left wall and a rear wall in the airbag device of Fig. 3;
Fig. 5 is constituted by various sectional views showing examples of behavior of the airbag device of Fig. 3 during deployment of an airbag;
Fig. 6 is a schematic view showing an example of behavior of a housing according to the first embodiment during deployment of the airbag;
Fig. 7 is a schematic plan view showing an example of deformation of respective walls before and after deployment of the airbag;
Fig. 8 is a three-sided view of an airbag device according to a second embodiment not being part of the present invention;
Fig. 9 is a partial perspective view showing an example of a boundary between a left wall and a rear wall of the airbag device of Fig. 8;
Fig. 10 is a schematic view summarizing concepts of the first and second embodiments; and
Fig. 11 is a partial perspective view showing an example of a part of an airbag device 300 according to the present invention.

### EXPLANATION OF REFERENCE NUMERALS

- 100, 200, 300: airbag device
- 101: instrument panel
- 102: airbag
- 109, 209, 309: housing
- 111: bottom surface
- 112: front wall
- 113, 213: rear wall
- 114: left wall
- 115: right wall
- 116, 216, 316: connecting portion
- 120: cut-away portion
- 122: front hook
- 123, 223: rear hook
- 130: extended cut-away portion
- 170: inflator
- 180: lid
- 182: lid shooter portion

### BEST MODES FOR CARRYING OUT THE INVENTION

### (First Embodiment)

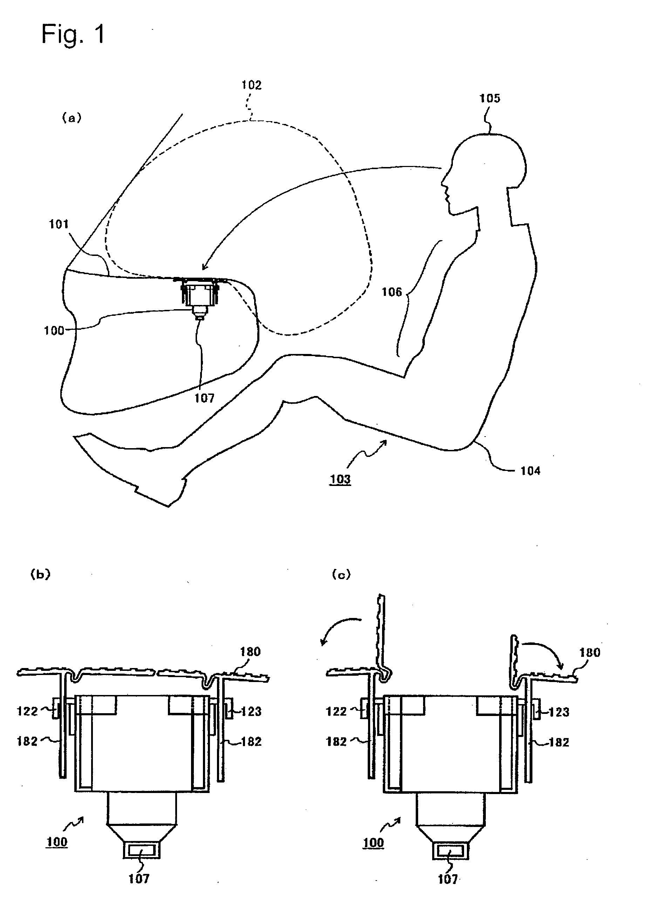

Fig. 1 is a layout view showing an example of a position of an airbag device 100 according to a first embodiment not being a part of the present invention in the interior of an instrument panel 101 of a vehicle. An airbag 102 deployed from the airbag device 100 is indicated virtually in Fig. 1A by a dotted line. In all of the following embodiments of the present application, the airbag device is disposed in a similar position within the vehicle. Fig. 1B is an enlarged view of the airbag device 100, and Fig. 1C is a view showing an example of behavior of the airbag device during deployment of the airbag 102.

During a vehicle collision, a head portion 105 and an upper body 106 of an occupant 103 sitting in a front passenger seat (not shown) rotate about a waist portion 104 so as to head toward a collision with the instrument panel 101. However, this collision is stopped by the deployed airbag 102.

The airbag device 100 is fixed to a beam (a cross beam 107) serving as a cross member disposed in front of the driving seat and front passenger seat of the vehicle.

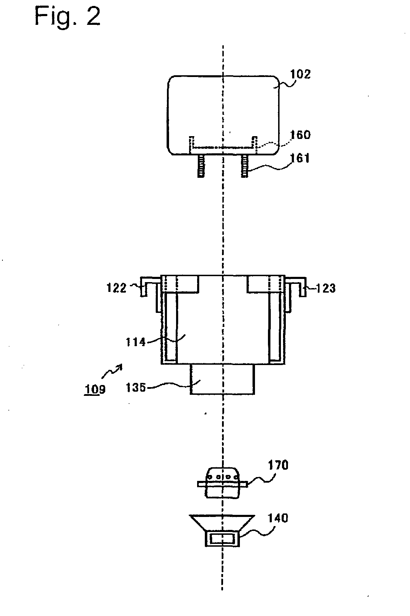

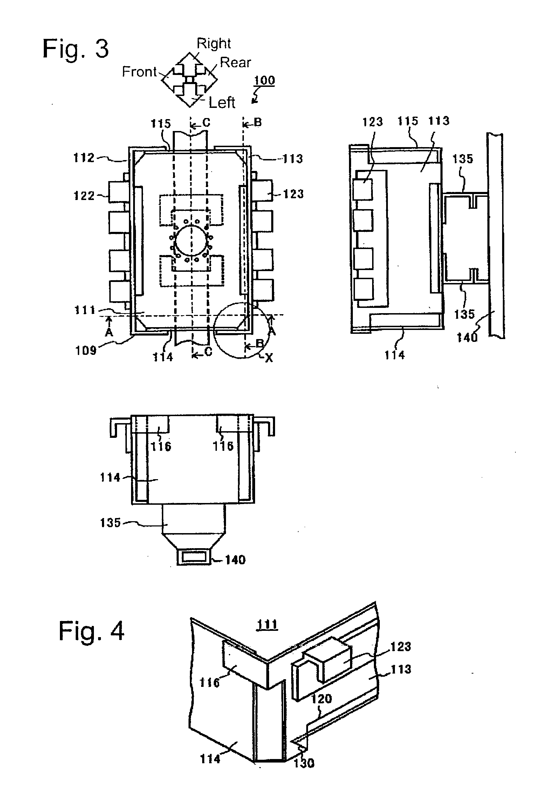

Fig. 2 is an assembly diagram of the airbag device of Fig. 1, and Fig. 3 is a three-sided view thereof. The airbag device 100 includes a housing 109 disposed inside the instrument panel 101 of the vehicle, the airbag 102 accommodated in the housing 109, and an inflator 170, accommodated in the housing 109, for inflating and deploying the airbag 102 by supplying gas to the airbag 102. The housing 109 includes a front wall 112 and a rear wall 113 latched at upper ends thereof to a lid 180 (Figs. 1B and 1C) serving as a lid portion, a left wall 114, a right wall 115, and a bottom surface 111.

The front wall 112 and the rear wall 113 include a front hook 122 and a rear hook 123 serving as latch members that are latched to a shooter portion 182 (Figs. 1B and 1C) of the lid 180.

Fig. 4 is a partial perspective view showing an example of a boundary between the left wall 114 and the rear wall 113 in the airbag device of Fig. 3. All inter-wall boundaries are constituted similarly, and therefore the other three boundaries are not shown in the drawings. As shown in the example of Fig. 4, the front wall 112 (not shown in Fig. 4) and the rear wall 113 are separated from the left wall 114 and the right wall 115 (not shown in Fig. 4), respectively, and connected to the left wall 114 and the right wall 115, respectively, by connecting portions 116 provided near the upper ends thereof.

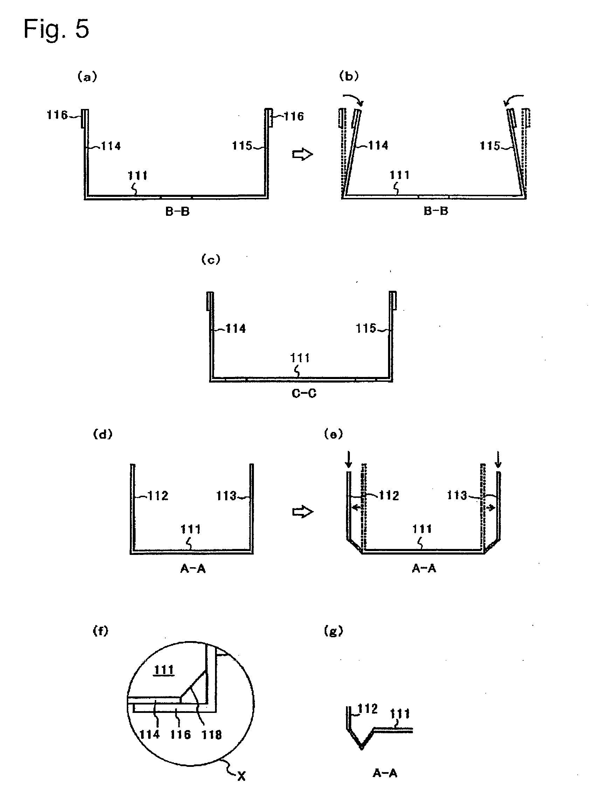

Fig. 5 is constituted by various sectional views showing examples of behavior of the airbag device of Fig. 3 during deployment of the airbag. Figs. 5A and 5B are B-B sectional views taken before and after deployment of the airbag 102. Fig. 5C is a C-C sectional view taken after deployment. Figs. 5D and 5E are A-A sectional views taken before and after deployment. Fig. 5F is an enlarged view of a site X in Fig. 3. Fig. 5G is another example of the A-A sectional view after deployment.

When the airbag 102 is inflated and deployed such that pressure is applied to the square walls 112, 113, 114, 115 from the inside, lower end portions of the front wall 112 and rear wall 113 incline outwardly, as shown in Fig. 5E, and although substantially the entirety of the walls 112, 113, including respective upper end portions thereof, moves downward due to the incline of the lower end portions, the walls 112, 113 are latched to the lid 182 while maintaining their flat plate shape. Hence, the upper end portions of the front wall and rear wall are latched to the lid 182 without bending, i.e. while maintaining a substantially rectilinear shape.

Hence, when the lid 182 opens in gatefold form, as shown in the enlarged view of Fig. 1, the upper end portions of the front wall 112 and the rear wall 113 function as hinges of the lid 182 without problems, and therefore impairment of an opening operation of the lid 182 during inflation and deployment of the airbag 102 can be prevented.

As shown in Figs. 5D and 5E, the front wall 112 and rear wall 113 are respectively structured to be capable of moving in a vehicle front-rear direction when lower portions of the front wall and rear wall deform. Therefore, the front wall 112 and rear wall 113 are unlikely to deform even when pressure is applied thereto from the inside, and accordingly, the front wall and rear wall substantially maintain their flat plate shape. Furthermore, in this embodiment, the connecting portion 116 is provided to connect the separated walls, and the connecting portion 116 forms a fragile part having low rigidity that connects the walls to each other partially, i.e. only in the vicinity of the upper ends thereof.

In this embodiment, the front wall 112 and the rear wall 113 are respectively separated from the left wall 114 and the right wall 115 from the upper end to the lower end. However, it should be noted here that it is sufficient for the front wall 112 and the rear wall 113 to be separated respectively from the left wall 114 and the right wall 115 at least from the upper end to a predetermined height, or in other words at least to the part that deforms. The reason for this is that as long as the walls are separated to the part that deforms, the object of this embodiment can be achieved sufficiently.

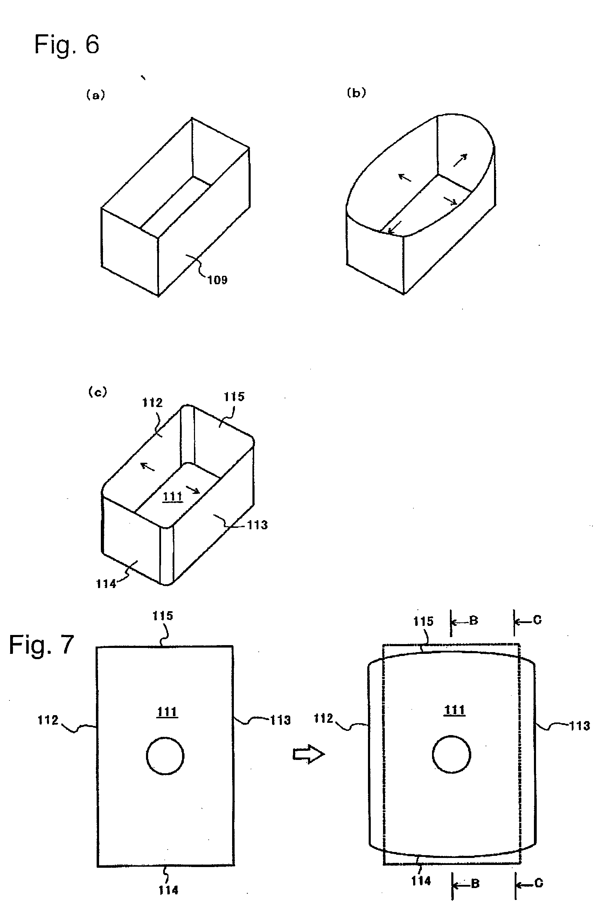

Fig. 6 is a schematic view showing an example of behavior of the housing according to this embodiment during deployment of the airbag. Fig. 6A shows the substantially rectangular parallelepiped housing 109 before the airbag 102 is deployed. In a conventional structure where all of the walls of the housing are connected, deformation that causes the housing to approach a spherical shape occurs after airbag deployment, as shown schematically in Fig. 6B. As a result, the opening portion of the housing cannot function appropriately as the hinge of the lid 180.

As shown in Figs. 5E and 6C, on the other hand, when the respective walls are separated and connected to each other by the fragile connecting portion at the upper ends only, as in this embodiment, the front wall 112 and the rear wall 113, which are highly rigid and therefore substantially maintain their flat plate shape, pull the left wall 114 and the right wall 115 by the fragile connecting portions 116 provided near the upper ends thereof during inflation and deployment of the airbag 102. As a result, the lower end portions of the front wall 112 and the rear wall 113, which are separated from the left wall 114 and the right wall 115, incline outwardly as described above, and although substantially the entirety of the walls 112, 113, including respective upper end portions thereof, moves downward due to the deformation of the lower end portions, the walls 112, 113 substantially maintain their flat plate shape. This behavior is unique to this embodiment.

By ensuring that the front wall 112 and the rear wall 113 substantially maintain their flat plate shape in this manner, the opening portion of the housing 109 does not bend even when the entirety of the walls 112, 113 attempts to move downward, and as a result, the function of the walls as the hinges of the lid 180 is not impaired. Further, in contrast to a technique of employing an additional reinforcing member, the weight of the housing 109 accommodating the airbag 102 does not increase.

Note that for ease of description, deformation of the lower end portions of the front wall 112 and the rear wall 113 is denoted by an angled shape in Fig. 5E, but in actuality, the lower end portions are more likely to deform in a more rounded, curved shape.

As shown in Fig. 5F, respective terminal ends of the front wall 112 and the rear wall 113 are positioned before corners of the bottom surface 111 such that only the connecting portions 116 respectively connect the front wall 112 and rear wall 113 to the left wall 114 and right wall 115 over the corners.

Here, the term "corner" denotes a virtual line portion or a virtual point portion at which the front, rear, left, and right walls 112, 113, 114, 115 intersect, and does not denote respective ends of chamfered portions of the bottom surface 111.

By providing the terminal ends of the rigid front wall 112 and rear wall 113 before the corners of the bottom surface 111 rather than extending the walls to the corners, fragility can be maintained in the connecting portions 116, thereby ensuring that the unique behavior of this embodiment is exhibited. In other words, only the fragile connecting portions 116 respectively connect the front wall 112 and rear wall 113 to the left wall 114 and right wall 115 over the corners.

Note that at this time, respective upper ends of the left wall 114 and the right wall 115 pulled by the connecting portions 116 incline inwardly in the vicinity of the inter-wall boundary, as shown in Fig. 5B.

Fig. 7 is a schematic plan view showing an example of deformation of the walls 112, 113, 114, 115 before and after deployment of the airbag 102. As shown in Figs. 7, 5B and 5C, the respective upper ends of the left wall 114 and right wall 115 pulled by the connecting portions 116 incline inwardly in the vicinity of the inter-wall boundary (Fig. 5B). In a central portion removed from the boundary, however, the upper ends either do not incline inwardly (Fig. 5C) or incline only slightly. In other words, the upper ends of the left wall 114 and right wall 115 take an outwardly projecting curved shape, as shown in Fig. 7.

As shown in Fig. 4, the connecting portion 116 is formed by extending and bending a part of the front wall 112 or the rear wall 113. In this embodiment, the connecting portion 116 is bent substantially at a right angle.

According to the constitution described above, the connecting portion 116 is a thin member formed by extending a part of the rigid front wall 112 or rear wall 113, and therefore fragility is maintained in the connecting portion 116. Further, the connecting portion 116 is molded integrally with the front wall 112 or the rear wall 113, enabling a reduction in the number of processing steps. Furthermore, in comparison with a case where the connecting portion 116 is constituted by an independent member and attached to the housing 109 by welding or the like, an excessive weight increase in the airbag device 100 can be avoided.

The bend in the connecting portion 116 is not limited to substantially a right angle, and the connecting portion 116 may be bent in an arc shape, a multi-stage bent shape, or a shape including an extending part. Here, the term "including an extending part" means forming the connecting portion 116 to be long enough in advance so that when the airbag 102 is deployed, a folded or bent part extends. By including this extending part, a deformation amount of the left and right walls 114, 115 can be reduced, thereby facilitating movement of the front and rear walls 112, 113.

### (Second Embodiment)

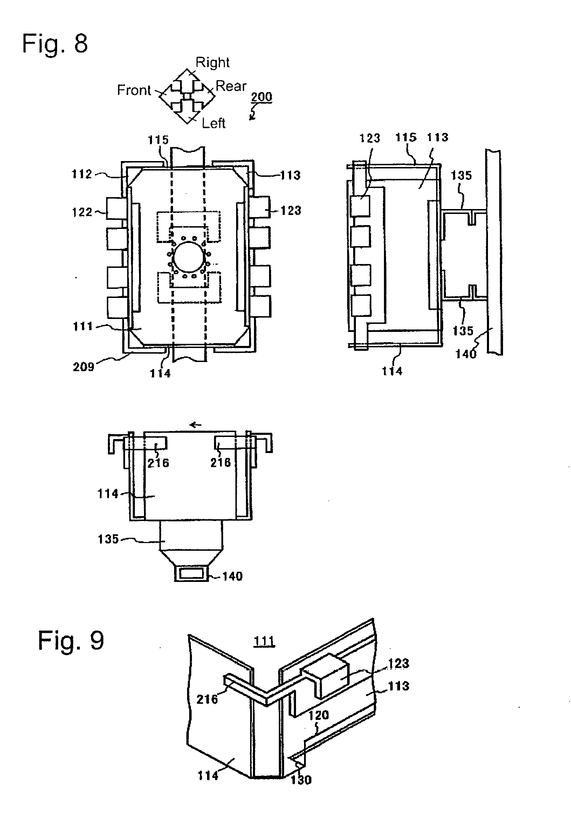

Fig. 8 is a three-sided view of an airbag device 200 according to a second embodiment not being a part of the present invention, and Fig. 9 is a partial perspective view showing an example of a boundary between the left wall 114 and the rear wall 113 of the airbag device of Fig. 8. To describe differences with the first embodiment, a housing 209 according to this embodiment differs from the housing 109 in that a connecting portion 216 is formed by extending a part of a hook (the rear hook 123 in Fig. 9) and bending the extended hook into substantially a right angle.

The rear hook 123 serves as batten (a splint) for maintaining the rigidity of the front wall 112 and rear wall 113. When the connecting portion is formed simply by extending the rear hook 123 as is, the rigidity of the connecting portion increases. Hence, a part of the rear hook 123 is extended to form the thin connecting portion 216, and as a result, fragility is maintained therein. Likewise with this constitution, a reduction in the number of processing steps can be achieved and an excessive increase in weight can be avoided in relation to the airbag device 200.

Note that since the behavior during deployment of the airbag 102 according to this embodiment is similar to that of the first embodiment, drawings corresponding to Figs. 5 and 7 are not provided.

### (Cut-away portion and extended cut-away portion)

A cut-away portion and an extended cut-away portion that are common to the first and second embodiments will now be described. As shown in Figs. 4 and 9, one or more cut out cut-away portions 120 are provided in the lower end portion of one or both of the front wall 112 and the rear wall 113. The bottom surface 111 includes a cut out extended cut-away portion 130 in a position corresponding to the cut-away portion 120.

According to this constitution, the fragility of the lower end portion of the front wall 112 or the rear wall 113 increases, and as a result, the rigidity of the upper end portion increases relative thereto, thereby promoting the outward incline deformation of the lower end portion shown in Fig. 5E.

The extended cut-away portion 130 does not have to be provided, but when the extended cut-away portion 130 is provided, deformation occurs such that in addition to the outward incline of the lower end portion of the front wall 112 or the rear wall 113, a part of the bottom surface 111 adjacent to the front wall 112 or the rear wall 113 moves downward, as shown in Fig. 5G. As a result, the deformation in which the entire front wall 112 or rear wall 113 moves downward while substantially maintaining its flat plate shape is further promoted. Moreover, since the bottom surface 111 can be cut away in addition to the front wall 112 or the rear wall 113, a manufacturing tolerance can be improved in comparison with a case where only the cut-away portion 120 is formed, and as a result, an improvement in productivity can be achieved.

### (Concepts of first and second embodiments)

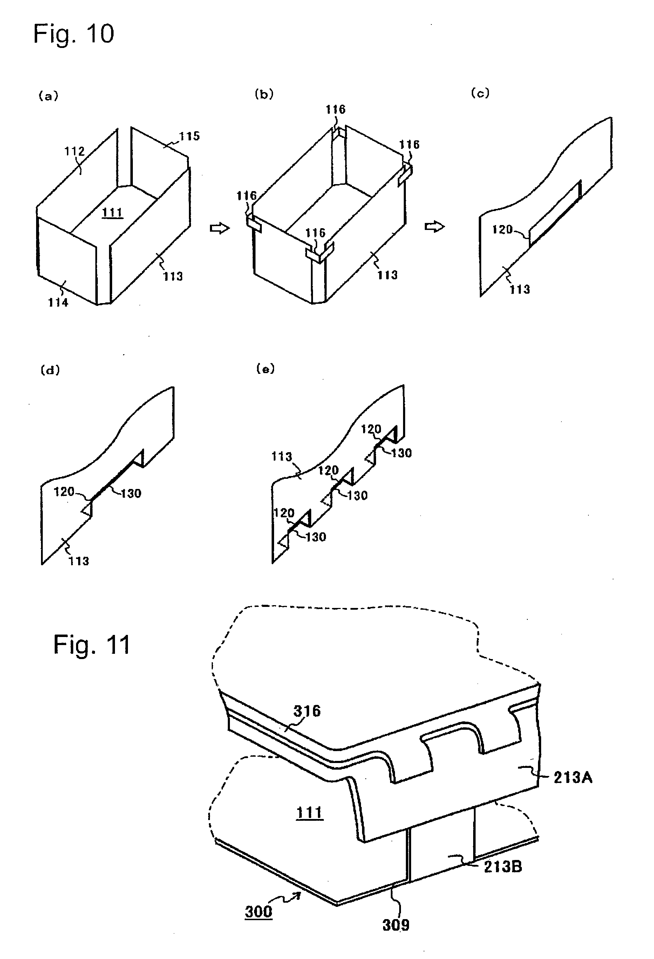

Fig. 10 is a schematic view summarizing concepts of the first and second embodiments. Fig. 10A shows an example of a base shape serving as a basis of the housing 109 or 209. First, this base shape, in which the respective walls 112, 113, 114, 115 are separated from each other, is evoked.

Next, as shown in Fig. 10B, the respective upper ends of the separated walls 112, 113, 114, 115 are connected by the fragile connecting portions 116. Further, as shown in Fig. 10C, the cut-away portion 120 is formed, or as shown in Fig. 10D, the additional cut-away portion 130 is added. As a result, the housing 109 or 209 of the first or the second embodiment is completed.

As shown in Fig. 10E, the cut-away portion 120 and the extended cut-away portion 130 may be provided in a plurality in the lower end portion of the front wall 112 or the rear wall 113.

### (Third Embodiment)

Fig. 11 is a partial perspective view showing an example of a part of an airbag device 300 according to the present invention. A housing 309 according to this embodiment is formed with a front wall (not shown) and a rear wall 213 but without a left wall and a right wall. The front wall and the rear wall are structured symmetrically, and therefore the rear wall 213 will be used in the following description, as shown in Fig. 11.

In this embodiment, left and right walls do not exist, and in this case, a fabric housing is provided (not shown). Hence, the airbag 102 is deployed upward without projecting from the left and right sides of the housing 309.

The front wall and rear wall 213 include a connecting portion 316 for connecting the respective upper ends thereof to each other, while terminal ends of the front wall and rear wall 213 are positioned before the corners of the bottom surface 111.

In this embodiment, the term "corner" denotes a virtual line portion or a virtual point portion at which front, rear, left, and right walls intersect in a case where front, rear, left, and right walls exist on the periphery of the bottom surface 111.

The housing 309 includes the front wall and the rear wall 213, a front hook (not shown) and a rear hook 223 serving as latch members for latching the upper ends of the front wall and the rear wall 213 to the lid 180 serving as the lid portion, and the bottom surface 111. A thickness of a wall upper portion 213A of the front wall and rear wall 213 is greater than a thickness of a wall lower portion 213B.

Likewise in the airbag device 300 including the housing 309 in which the front wall and rear wall 213 are connected by the connecting portion 316, when the airbag 102 is inflated and deployed such that pressure is applied to the front wall and rear wall 213 from the inside, the wall lower portion 213B of the front wall and rear wall 213 inclines downward while the wall upper portion 213A substantially maintains its flat plate shape. Accordingly, the wall upper portion 213A of the front wall and rear wall 213, which is latched to the lid 180, is latched to the lid 180 without bending, i.e. while maintaining a substantially rectilinear shape. Hence, the wall upper portion 213A of the front wall and rear wall 213 functions as the hinge of the lid 180 without problems when the lid 180 opens in gatefold form, and as a result, impairment of the opening operation of the lid 180 during inflation and deployment of the airbag 102 can be prevented.

In other words, the wall lower portion 213B of the front wall and rear wall 213 inclines outwardly, as described above, and although substantially the entirety of the front wall and rear wall 213, including the wall upper portion 213A, moves downward due to the deformation of the wall lower portion 213B, the front wall and rear wall 213 substantially maintain their flat plate shape. This behavior is unique to this embodiment.

The wall upper portion 213A of the front wall and rear wall 213 is rigid and therefore unlikely to deform even when pressure is applied thereto from the inside. Moreover, the connecting portion 316 connecting the front wall and rear wall 213 connects the front wall and rear wall 213 in a restricted site, i.e. only at the upper end, and therefore forms a fragile part having low rigidity. Furthermore, by positioning the terminal ends of the rigid front wall and rear wall 213 before the corners of the bottom surface 111 rather than extending the walls to the corners, fragility can be maintained in the connecting portion 316, thereby ensuring that the unique behavior of this embodiment is exhibited. In other words, only the fragile connecting portion 316 connects the front wall and rear wall 213 over the corners and the front and rear.

In the front wall or the rear wall 213 described above, the thickness of the wall upper portion 213A is greater than the thickness of the wall lower portion 213B.

According to this constitution, the wall lower portion 213B of the front wall or the rear wall 213 increases in fragility, and as a result, the rigidity of the wall upper portion 213A increases relative thereto, thereby promoting the outward incline deformation of the wall lower portion.

Note that the terms "wall upper portion 213A" and "wall lower portion 213B" do not mean that the wall is divided equally at a precise halfway point of its height, and the thickness difference may be provided at any height. However, the wall upper portion 213A and the wall lower portion 213B are preferably divided near the center.

### INDUSTRIAL APPLICABILITY

The present invention may be used in an airbag device for protecting an occupant of a front passenger seat of a vehicle.

## Claims

1. An airbag device (300) comprising:
a housing (309) disposed in an interior of an instrument panel (101) of a vehicle;
an airbag (102) accommodated in the housing
(309); and
an inflator (170), accommodated in the housing (309), for inflating and deploying the airbag (102) by supplying gas to the airbag (102),
the housing (309) comprises a front wall and a rear wall (213) that are latched by respective upper ends thereof to a lid portion (180), and
a bottom surface (111), **characterized in that**
the front wall and the rear wall (213) include a connecting portion (316), separate from the lid portion (180), that connects the front wall and the rear wall (213) to each other by the respective upper ends thereof, and
respective terminal ends of the front wall and the rear wall (213) are provided before a corner of the bottom surface (111).

2. The airbag device (300) according to claim 1, **characterized in that** a thickness of a wall upper portion of the front wall or the rear wall (213) is greater than a thickness of a wall lower portion.

## Patentansprüche

1. Airbagvorrichtung (300), umfassend:
ein Gehäuse (309), das im Inneren eines Armaturenbretts (101) eines Fahrzeugs angeordnet ist;
einen Airbag (102), der in dem Gehäuse (309) untergebracht ist; und
einen Gasgenerator (170), der in dem Gehäuse (309) untergebracht ist, zum Aufblasen und Entfalten des Airbags (102) durch Zuführen von Gas zu dem Airbag (102),
das Gehäuse (309) eine Vorderwand und eine Rückwand (213), die über jeweilige obere Enden davon mit einem Deckelabschnitt (180) verrastet sind, und eine Bodenfläche (111) umfasst, **dadurch gekennzeichnet, dass**
die Vorderwand und die Rückwand (213) einen Verbindungsabschnitt (316) separat von dem Deckelabschnitt (180) aufweisen, der die Vorderwand und die Rückwand (213) miteinander über die jeweiligen oberen Enden davon verbindet, und
jeweilige Abschlussenden der Vorderwand und der Rückwand (213) vor einer Ecke der Bodenfläche (111) vorgesehen sind.

2. Airbagvorrichtung (300) nach Anspruch 1, **dadurch gekennzeichnet, dass** eine Dicke eines oberen Wandabschnitts der Vorderwand oder der Rückwand (213) größer als eine Dicke eines unteren Wandabschnitts ist.

## Revendications

1. Dispositif d'airbag (300) comprenant :
un boîtier (309) disposé à l'intérieur d'un tableau de bord (101) d'un véhicule ;
un airbag (102) logé dans le boîtier (309) ; et
un gonfleur (170), logé dans le boîtier (309), pour gonfler et déployer l'airbag (102) en alimentant du gaz dans l'airbag (102),
le boîtier (309) comprenant une paroi avant et une paroi arrière (213) qui sont enclenchées par des extrémités supérieures respectives de celles-ci sur une partie de couvercle (180), et une surface de fond (111), **caractérisé en ce que**
la paroi avant et la paroi arrière (213) comportent une partie de raccordement (316), séparée de la partie de couvercle (180), qui raccorde la paroi avant et la paroi arrière (213) l'une à l'autre par les extrémités supérieures respectives de celles-ci, et
des extrémités terminales respectives de la paroi avant et de la paroi arrière (213) sont agencées avant un coin de la surface de fond (111).

2. Dispositif d'airbag (300) selon la revendication 1, **caractérisé en ce qu'**une épaisseur d'une partie supérieure de paroi de la paroi avant ou de la paroi arrière (213) est supérieure à une épaisseur d'une partie inférieure de paroi.
